# EUROPÄISCHE PATENTANMELDUNG

(11) **EP 3 216 923 A1**
(43) Veröffentlichungstag der Anmeldung: **13.09.2017**
(21) Anmeldenummer: 17159017.7
(22) Anmeldetag: 02.03.2017
(51) Int. Cl.: E01H 1/04, A01G 1/12, A01B 45/00, B06B 1/10, B07B 1/30

(54) **REINIGUNGSVORRICHTUNG**

(30) Priorität: 09.03.2016 DE 202016101311 U
(71) Anmelder: SMG Sportplatzmaschinenbau GmbH, 89269 Vöhringen (DE)
(72) Erfinder: Owegeser, Johann, 89189 Illerrieden (DE)
(74) Vertreter: Pfister & Pfister Patent- und Rechtsanwälte

(57) **Zusammenfassung**

Die Erfindung betrifft eine Reinigungsvorrichtung 10 mit einem auf einem Untergrund fahrbaren Rahmen 15, und einem Rüttelsieb 50, welches an dem Rahmen begrenzt bewegbar angebracht ist und mit einem Kontaktelement 55 verbunden ist. Eine Rüttelwalze 20 ist um eine Drehachse drehbar an dem Rahmen angebracht und weist eine Außenoberfläche auf, in welcher radiale Erhebungen ausgebildet sind. Ein Vorspannelement 57 spannt das Rüttelsieb derart vor, dass das Kontaktelement 55 an der Rüttelwalze anliegt.

## Beschreibung

Die Erfindung betrifft eine Reinigungsvorrichtung, welche insbesondere zum Reinigen eines Untergrunds wie eines Rasens, eines Kunstrasens oder eines Sportplatzes vorgesehen ist.

Derartige Reinigungsvorrichtungen werden typischerweise verwendet, um Materialien wie Sand oder Füllstoffe eines Kunstrasens zu reinigen. Hierzu können solche Materialien insbesondere aufgenommen, gereinigt und zurückgeführt werden. Zum Reinigen kann insbesondere ein Rüttelsieb vorgesehen sein.

Bekannte Reinigungsvorrichtungen haben häufig einen verhältnismäßig komplexen Aufbau.

Es ist deshalb eine Aufgabe der Erfindung, eine Reinigungsvorrichtung alternativ, beispielsweise einfacher auszuführen.

Dies wird erfindungsgemäß durch eine Reinigungsvorrichtung nach Anspruch 1 erreicht. Vorteilhafte Ausgestaltungen können beispielsweise den Unteransprüchen entnommen werden.

Die Erfindung betrifft eine Reinigungsvorrichtung mit einem Rahmen, welcher dazu ausgebildet ist, auf einem Untergrund zu fahren, und mit einem Rüttelsieb, welches an dem Rahmen begrenzt bewegbar angebracht ist und mit einem Kontaktelement verbunden ist.

Die Reinigungsvorrichtung weist zumindest eine Rüttelwalze auf, welche um eine Drehachse drehbar an dem Rahmen angebracht ist. Die Rüttelwalze weist eine Außenoberfläche auf, in welcher eine Anzahl radialer Erhebungen ausgebildet sind.

Des Weiteren ist ein Vorspannelement vorgesehen, welches dazu ausgebildet ist, das Rüttelsieb derart vorzuspannen, dass das Kontaktelement an der Rüttelwalze anliegt.

Mittels der erfindungsgemäßen Reinigungsvorrichtung ist es möglich, auf einfache Weise einen Antrieb des Rüttelsiebs zu erreichen, so dass dieses laufend bewegt wird und damit Materialien, welche auf das Rüttelsieb verbracht werden, durch rüttelnde Bewegung effektiv gereinigt werden. Der Antrieb unter Verwendung der mit radialen Erhebungen versehenen Außenoberfläche ist besonders zuverlässig und wartungsarm.

Gemäß einer bevorzugten Ausführung ist vorgesehen, dass die Reinigungsvorrichtung zumindest eine Antriebswalze aufweist, welche auf dem Untergrund aufliegt und welche mit der Rüttelwalze gekoppelt ist, so dass die Antriebswalze bei Bewegung des Rahmens auf dem Untergrund die Rüttelwalze in Drehung versetzt. Dies ermöglicht eine Verwendung der Bewegung des Rahmens auf dem Untergrund für den Zweck des Antriebs der Rüttelwalze. Beispielsweise kann der Rahmen von einer anderen Einheit als Anhänger gezogen werden und die damit auf den Wagen übertragene Bewegung bzw. Energie kann von der Antriebswalze aufgenommen werden. Auf das Vorsehen eines eigenen Antriebs für die Rüttelwalze kann dann beispielsweise verzichtet werden, was Aufwand und Gewicht einspart.

Die Rüttelwalze kann gemäß einer Ausführung über ein Getriebe mit der Antriebswalze verbunden sein. Damit kann eine Veränderung von Rotationsgeschwindigkeiten zwischen Rüttelwalze und Antriebswalze erreicht werden.

Die Rüttelwalze kann auch konzentrisch mit der Antriebswalze ausgebildet sein. Beispielsweise können Antriebswalze und Rüttelwalze eine gemeinsame Drehachse aufweisen.

Die Rüttelwalze kann auch einen separaten Antrieb, insbesondere einen Motor oder Elektromotor, aufweisen. Dies ermöglicht einen unabhängigen Antrieb der Rüttelwalze.

Die Rüttelwalze kann auch mit einem Antrieb der Reinigungsvorrichtung gekoppelt sein. Bei einem solchen Antrieb kann es sich insbesondere um einen Antrieb handeln, welcher für die Fortbewegung des Rahmens auf dem Untergrund sorgt. Beispielsweise kann es sich dabei um einen Elektromotor oder einen Verbrennungsmotor handeln.

Gemäß einer bevorzugten Ausführung weist die Reinigungsvorrichtung zumindest eine Reinigungsbürste zum Aufnehmen von Material von dem Untergrund auf. Damit kann Material, welches vom Boden entfernt und insbesondere mittels des Rüttelsiebs gereinigt werden soll, vom Boden bzw. Untergrund aufgenommen werden und kann dem Rüttelsieb zugeführt werden.

Geschickter Weise ist die Reinigungsbürste in Fahrtrichtung vor der Antriebswalze angeordnet. Dies hat sich in typischen Einsatzsituationen als vorteilhaft erwiesen.

Die Reinigungsbürste kann insbesondere über ein Getriebe mit der Antriebswalze gekoppelt sein, so dass die Antriebswalze bei Bewegung des Rahmens auf dem Untergrund die Reinigungsbürste in Drehung versetzt. Dies erlaubt die Verwendung der weiter oben bereits erwähnten Bewegung des Rahmens über den Untergrund auch zum Antrieb der Reinigungsbürste.

Alternativ kann jedoch beispielsweise auch vorgesehen sein, dass für die Antriebswalze ein eigener Antrieb, beispielsweise in Form eines Motors, vorgesehen ist, oder dass der Antrieb der Reinigungswalze von einem Antrieb der Reinigungsvorrichtung abgeleitet wird.

Gemäß einer Weiterbildung ist neben der Reinigungsbürste ein Gleitschlitten zur Tiefeneinstellung der Reinigungsbürste angeordnet. Damit kann die Reinigungsvorrichtung an unterschiedliche Bodenbeschaffenheiten angepasst werden, beispielsweise an unterschiedliche Grashöhen.

Geschickter Weise ist das Rüttelsieb linear, insbesondere im Wesentlichen horizontal linear bewegbar. Dies entspricht einer einfachen und zweckmäßigen Ausführung. Auch andere Bewegungsformen, beispielsweise kreis- oder ellipsoidförmige Bewegungen, und auch vertikale Bewegungen sind jedoch durchaus möglich.

Vorzugsweise ist die Außenoberfläche der Rüttelwalze in eine Mehrzahl von ebenen Flächen, bevorzugt acht ebene Flächen, eingeteilt, wobei die Erhebungen an jeweiligen Kanten zwischen den ebenen Flächen ausgebildet sind. Dies hat sich für typische Einsatzzwecke als vorteilhaft erwiesen. Insbesondere ist eine einfache Fertigung der Rüttelwalze möglich.

Gemäß einer anderen Ausführung ist die Außenoberfläche der Rüttelwalze wellenförmig ausgebildet, wobei die Erhebungen an jeweiligen Wellenbergen ausgebildet sind. Dies kann zu einem anderen, insbesondere gleichmäßigeren Verlauf der Bewegung des Rüttelsiebs führen.

Vorzugsweise ist das Kontaktelement als Rad zur Anlage an der Rüttelwalze ausgebildet. Damit kann eine vorteilhaft geringe Reibung erreicht werden, insbesondere wenn das Rad parallel zur Rüttelwalze drehbar ausgebildet ist.

Das Kontaktelement kann insbesondere als Teil des Rahmens ausgebildet sein oder an einem Träger, der mit dem Rahmen verbunden ist, vorgesehen sein.

Geschickter Weise ist das Vorspannelement als Feder oder als elastisches Element ausgebildet. Damit kann für eine zuverlässige Vorspannung gesorgt werden.

Das Vorspannelement kann insbesondere als Teil einer Siebaufhängung ausgebildet sein. Dies ermöglicht die Vereinigung von zwei Funktionalitäten in einem Element, was Aufwand, Platz und Gewicht einspart.

Das Rüttelsieb kann vorteilhaft schwingend gelagert sein. Dadurch wird in einfacher Weise eine Bewegung ermöglicht, welche die beabsichtigte Reinigungswirkung erreicht.

Gemäß einer Ausführung ist das Rüttelsieb an einer Anzahl von Gummileisten aufgehängt.

Gemäß einer Weiterbildung weist das Rüttelsieb eine verstellbare Korngröße auf. Dies ermöglicht eine einfache Anpassung an unterschiedliche Reinigungsaufgaben.

Die Reinigungsvorrichtung oder der Rahmen kann handbewegbar fahrbar ausgebildet sein oder mit einer Kupplung zum Anhängen an ein Pflegefahrzeug, insbesondere einen Traktor, Mähtraktor oder Kommunalfahrzeug ausgebildet sein. Dies ermöglicht die Bewegung der Reinigungsvorrichtung über einen zu reinigenden Untergrund, insbesondere einen Rasen, mittels einer externen Einheit wie beispielsweise eines Fahrzeugs oder auch per Hand.

Die Reinigungsvorrichtung oder der Rahmen können jedoch auch selbstfahrend ausgebildet sein. Hierzu kann beispielsweise ein Motor, insbesondere ein Elektromotor oder ein Verbrennungsmotor vorgesehen sein. Dieser kann auch andere Antriebsaufgaben übernehmen, beispielsweise die Rüttelwalze oder die Reinigungsbürste antreiben, wie dies weiter oben bereits beschrieben wurde.

In der Zeichnung ist die Erfindung insbesondere in einem Ausführungsbeispiel schematisch dargestellt. Es zeigen:
- Fig. 1: eine perspektivische Ansicht auf eine Reinigungsvorrichtung,
- Fig. 2: eine seitliche Schnittansicht der Reinigungsvorrichtung von Figur 1,
- Fig. 3: eine andere seitliche Schnittansicht der Reinigungsvorrichtung von Figur 1.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

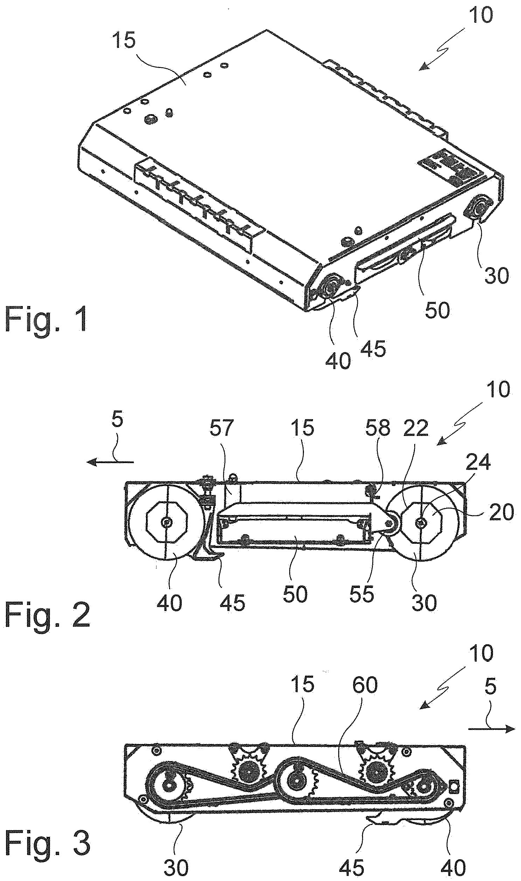

Figur 1 zeigt eine Reinigungsvorrichtung 10 gemäß einem Ausführungsbeispiel der Erfindung.

Die Reinigungsvorrichtung 10 weist einen Rahmen 15 auf, welcher die Reinigungsvorrichtung 10 überwiegend nach außen und insbesondere nach oben begrenzt.

Die Reinigungsvorrichtung 10 weist eine Antriebswalze 30 auf, welche sich quer zu einer beabsichtigten Fahrtrichtung der Reinigungsvorrichtung 10 erstreckt und dazu ausgebildet ist, auf einem Untergrund aufzuliegen.

Die Reinigungsvorrichtung 10 weist des Weiteren eine Reinigungsbürste 40 auf, welche walzenförmig ausgebildet ist, sich ebenfalls quer zur Fahrtrichtung der Reinigungsvorrichtung 10 erstreckt und ebenfalls dazu ausgebildet ist, auf einem Untergrund aufzuliegen.

Mit der Antriebswalze 30 und der Reinigungsbürste 40 wird ermöglicht, dass der Rahmen 15 bzw. die Reinigungsvorrichtung 10 sich auf einem Untergrund bewegt. Dabei kann es sich insbesondere um einen Untergrund handeln, welcher eine Wiese, eine Grasfläche, ein Kunstrasen oder ein Sportplatz ist. Auf derartigen Untergründen befinden sich häufig Materialien wie beispielsweise Füllmaterial oder Sand, welche durch die Reinigungsvorrichtung 10 gereinigt werden sollen.

Dabei hat die Antriebswalze 30 insbesondere die weitere Funktion, eine Bewegung des Rahmens 15 über den Untergrund aufzunehmen. Diese Bewegung kann für den Antrieb von Komponenten der Reinigungsvorrichtung 10 verwendet werden, wie weiter unten näher ausgeführt werden wird.

Die Reinigungsbürste 40 hat hingegen insbesondere die weitere Funktion, Materialien vom Untergrund aufzunehmen und einer Reinigung innerhalb der Reinigungsvorrichtung 10 zuzuführen.

Die Reinigungsvorrichtung 10 ist dabei vorliegend so ausgebildet, dass sie von einem Fahrzeug wie beispielsweise einem Traktor oder einem Kommunalfahrzeug gezogen werden kann. Insbesondere durch die Ausgestaltung mit der Antriebswalze 30, welche die durch das Fahrzeug vermittelte Bewegung aufnimmt, kann auf eigene Antriebe wie Motoren oder eine andere Art der Energieversorgung innerhalb der Reinigungsvorrichtung 10 verzichtet werden. Dies ermöglicht eine besonders kompakte und leichte Bauform.

Die Reinigungsvorrichtung 10 weist ferner ein Rüttelsieb 50 auf. Dieses ist in Figur 1 lediglich an seinen außenliegenden Teilen erkennbar, welche über den Rahmen 15 hervorstehen. Das Rüttelsieb 50 wird insbesondere weiter unten mit Bezug auf Figur 2 näher beschrieben werden.

Unmittelbar neben der Reinigungsbürste 40 ist ein Gleitschlitten 45 angeordnet. Dieser ist dazu ausgebildet, auf dem Untergrund zu gleiten. Der Gleitschlitten 45 ist dabei höhenverstellbar an dem Rahmen 15 angeordnet, so dass die Höhe der Drehachse der Reinigungsbürste 40 mittels der Höhenverstellung des Gleitschlittens 45 einstellbar ist. So kann unterschiedlichen Beschaffenheiten des zu reinigenden Untergrunds Rechnung getragen werden, wobei beispielsweise unterschiedliche Grashöhen Anlass zu einer Einstellung einer passenden Höhe geben können.

Figur 2 zeigt die Reinigungsvorrichtung 10 in einer seitlichen Schnittansicht. Dabei ist auch eine Fahrtrichtung 5 eingezeichnet, wobei es sich dabei um diejenige Fahrtrichtung handelt, in welcher die Reinigungsvorrichtung 10 typischerweise während eines normalen Betriebs zum Reinigen eines Untergrunds bewegt wird. Dies schließt nicht aus, dass die Reinigungsvorrichtung 10 auch in der anderen Richtung bewegt wird, insbesondere zum Transport, also wenn sie gerade nicht in Betrieb ist.

In Figur 2 ist insbesondere auch zu sehen, dass das Rüttelsieb 50 zwischen der Antriebswalze 30 und der Reinigungsbürste 40 angeordnet ist. Das Rüttelsieb 50 ist dabei in nachfolgend beschriebener Art und Weise im Rahmen 15 aufgehängt.

Linksseitig ist das Rüttelsieb 50 durch ein Vorspannelement 57 aufgehängt, welches als Gummielement ausgeführt ist. Dieses Gummielement sorgt für eine nach rechts gerichtete Vorspannung des Rüttelsiebs 50. Gleichzeitig ist das Gummielement jedoch elastisch, so dass das Rüttelsieb 50 einer nach links gerichteten Kraft begrenzt ausweichen kann.

Rechtsseitig ist das Rüttelsieb 50 mittels einer Anzahl von Gummileisten 58 am Rahmen 15 aufgehängt. Die Gummileisten 58 erlauben eine begrenzte horizontale Bewegung des Rüttelsiebs 50 im Rahmen 15.

Durch Zusammenwirken des Vorspannelements 57 und der Gummileisten 58 wird das Rüttelsieb 50 auf einer innerhalb des Rahmens 15 zumindest in etwa konstanten Höhe gehalten, welche insbesondere dann leicht variiert werden kann, wenn das Rüttelsieb 50 eine mögliche pendelartige Bewegung ausführt.

Rechtsseitig am Rüttelsieb 50 ist ein Kontaktelement 55 angeordnet, welches vorliegend als Rad ausgebildet ist. Auf dessen Bedeutung wird weiter unten näher eingegangen werden.

Wie in Figur 2 weiter zu sehen ist weist die Reinigungsvorrichtung 10 ferner eine Rüttelwalze 20 auf. Diese ist konzentrisch mit der Antriebswalze 30 ausgebildet, so dass die Antriebswalze 30 und die Rüttelwalze 20 eine gemeinsame Drehachse 24 haben.

Die Rüttelwalze 20 weist eine Außenoberfläche 22 auf, welche vorliegend achteckig ausgebildet ist. Dies bedeutet, dass die Außenoberfläche 22 insgesamt acht ebene Flächen hat, welche an jeweiligen Ecken aneinandergrenzen. Die Ecken stellen dabei radiale Erhebungen dar, da sie am weitesten von der Drehachse 24 entfernt sind.

Das Kontaktelement 55 liegt unmittelbar an der Rüttelwalze 20 an, kommt also mit deren Außenoberfläche 22 in Kontakt. Wenn die Reinigungsvorrichtung 10 über einen Boden bewegt wird, dreht sich aufgrund des Kontakts zwischen dem Boden und der Antriebswalze 30 die Antriebswalze 30, wobei diese Drehung unmittelbar auf die Rüttelwalze 20 übertragen wird. Dies führt dazu, dass sich auch die Außenoberfläche 22 der Rüttelwalze 20 entsprechend dreht.

Das Vorspannelement 57 übt wie bereits weiter oben erwähnt eine nach rechts gerichtete Vorspannung auf das Rüttelsieb 50 aus. Diese Vorspannung führt dazu, dass das Kontaktelement 55 direkt an der Außenoberfläche 22 der Rüttelwalze 20 anliegt. Somit kommt es abwechselnd mit einer der Ecken und einer der ebenen Flächen in Kontakt. Aufgrund der unterschiedlichen radialen Abstände zur Drehachse 24 wird dabei eine alternierende nach links gerichtete Kraft auf das Kontaktelement 55 und damit auf das Rüttelsieb 50 ausgeübt, so dass das Rüttelsieb 50 entsprechend horizontal bewegt wird. Dies führt zu einer besonders einfach realisierten Bewegung des Rüttelsiebs 50, welche sich unmittelbar von der Bewegung der Reinigungsvorrichtung 10 über einen Boden ableitet.

Figur 3 zeigt eine weitere seitliche Schnittansicht der Reinigungsvorrichtung 10, wobei die Fahrtrichtung 5 hier in die andere Richtung zeigt, so dass auch die Positionen von Antriebswalze 30 und Reinigungsbürste 40 im Vergleich zu Figur 2 vertauscht sind.

Dabei ist ein Getriebe 60 zu sehen, welches die Antriebswalze 30 mit der Reinigungsbürste 40 derart verbindet, dass bei einer Drehbewegung der Antriebswalze 30 auch die Reinigungsbürste 40 angetrieben wird. Somit kann die Antriebswalze 30 nicht nur das Rüttelsieb 50 in Bewegung versetzen, sondern auch die Reinigungsbürste 40.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Reinigungsvorrichtung mit einem Rahmen (15), welcher dazu ausgebildet ist, auf einem Untergrund zu fahren und einem Rüttelsieb (50), welches an dem Rahmen (15) begrenzt bewegbar angebracht ist und mit einem Kontaktelement (55) verbunden ist, wobei die Reinigungsvorrichtung zumindest eine Rüttelwalze (20) aufweist, welche um eine Drehachse (24) drehbar an dem Rahmen (15) angebracht ist und eine Außenoberfläche (22) aufweist, in welcher eine Anzahl radialer Erhebungen ausgebildet sind, und ein Vorspannelement (57) vorgesehen ist, welches dazu ausgebildet ist, das Rüttelsieb (50) derart vorzuspannen, dass das Kontaktelement (55) an der Rüttelwalze (20) anliegt.

2. Reinigungsvorrichtung nach Anspruch 1, **dadurch gekennzeichnet, dass** die Reinigungsvorrichtung (10) zumindest eine Antriebswalze (30) aufweist, welche auf dem Untergrund aufliegt und welche mit der Rüttelwalze (20) gekoppelt ist, so dass die Antriebswalze (30) bei Bewegung des Rahmens (15) auf dem Untergrund die Rüttelwalze (20) in Drehung versetzt.

3. Reinigungsvorrichtung nach einem der vorhergehenden Ansprüche, **dadurch gekennzeichnet, dass** die Rüttelwalze (20) über ein Getriebe mit der Antriebswalze (30) verbunden ist.

4. Reinigungsvorrichtung nach einem der vorhergehenden Ansprüche, **dadurch gekennzeichnet, dass** die Rüttelwalze (20) konzentrisch mit der Antriebswalze (30) ausgebildet ist.

5. Reinigungsvorrichtung nach einem der vorhergehenden Ansprüche, **dadurch gekennzeichnet, dass** die Rüttelwalze (20) einen separaten Antrieb, insbesondere einen Motor oder Elektromotor, aufweist, oder mit einem Antrieb der Reinigungsvorrichtung (10) gekoppelt ist.

6. Reinigungsvorrichtung nach einem der vorhergehenden Ansprüche, **dadurch gekennzeichnet, dass** die Reinigungsvorrichtung (10) zumindest eine Reinigungsbürste (40) zum Aufnehmen von Material von dem Untergrund aufweist, welche in Fahrtrichtung (5) vorzugsweise vor der Antriebswalze (30) angeordnet ist.

7. Reinigungsvorrichtung nach einem der vorhergehenden Ansprüche, **dadurch gekennzeichnet, dass** neben der Reinigungsbürste (40) ein Gleitschlitten (45) zur Tiefeneinstellung der Reinigungsbürste (40) angeordnet ist.

8. Reinigungsvorrichtung nach einem der vorhergehenden Ansprüche, **dadurch gekennzeichnet, dass** das Rüttelsieb (50) linear, insbesondere im Wesentlichen horizontal linear bewegbar ist.

9. Reinigungsvorrichtung nach einem der vorhergehenden Ansprüche, **dadurch gekennzeichnet, dass** die Außenoberfläche (22) der Rüttelwalze (20) in eine Mehrzahl von ebenen Flächen, bevorzugt acht ebene Flächen, eingeteilt ist, wobei die Erhebungen an jeweiligen Kanten zwischen den ebenen Flächen ausgebildet sind, oder die Außenoberfläche (22) der Rüttelwalze (20) wellenförmig ausgebildet ist, wobei die Erhebungen an jeweiligen Wellenbergen ausgebildet sind.

10. Reinigungsvorrichtung nach einem der vorhergehenden Ansprüche, **dadurch gekennzeichnet, dass** das Kontaktelement (55) als Rad zur Anlage an der Rüttelwalze (20) ausgebildet ist.

11. Reinigungsvorrichtung nach einem der vorhergehenden Ansprüche, **dadurch gekennzeichnet, dass** das Kontaktelement (55) als Teil des Rahmens (15) ausgebildet ist oder an einem Träger, der mit dem Rahmen (15) verbunden ist, vorgesehen ist.

12. Reinigungsvorrichtung nach einem der vorhergehenden Ansprüche, **dadurch gekennzeichnet, dass** das Vorspannelement (57) als Teil einer Siebaufhängung ausgebildet ist.

13. Reinigungsvorrichtung nach einem der vorhergehenden Ansprüche, **dadurch gekennzeichnet, dass** das Rüttelsieb (50) schwingend gelagert ist.

14. Reinigungsvorrichtung nach einem der vorhergehenden Ansprüche, **dadurch gekennzeichnet, dass** das Rüttelsieb (50) an einer Anzahl von Gummileisten (58) aufgehängt ist.

15. Reinigungsvorrichtung nach einem der vorhergehenden Ansprüche, **dadurch gekennzeichnet, dass** das Rüttelsieb (50) eine verstellbare Korngröße aufweist.
